# EUROPEAN PATENT APPLICATION

(11) **EP 3 632 527 A1**
(43) Date of publication of application: **08.04.2020**
(21) Application number: 18809301.7
(22) Date of filing: 31.05.2018
(51) Int. Cl.: B01D 71/64, B01D 53/22, B01D 63/10, B01D 69/10, B01D 69/12

(54) **GAS SEPARATION MEMBRANE, GAS SEPARATION MEMBRANE ELEMENT, GAS SEPARATOR, AND GAS SEPARATION METHOD**

(30) Priority: 01.06.2017 JP 2017108948
(71) Applicant: Toray Industries, Inc., Tokyo 103-8666 (JP)
(72) Inventor: TAKAHASHI Rina, Otsu-shi Shiga 520-8558 (JP); SATO Kazuki, Otsu-shi Shiga 520-8558 (JP); KOIWA Masakazu, Otsu-shi Shiga 520-8558 (JP); SASAKI Takao, Otsu-shi Shiga 520-8558 (JP)
(74) Representative: Kador & Partner PartG mbB
(86) International application number: PCT/JP2018/021067
(87) International publication number: WO 2018/221684

(57) **Abstract**

The present invention pertains to a gas separation membrane comprising: a porous supporting layer; and a separation function layer disposed on the porous supporting layer and including a crosslinked aromatic polyamide obtained by polycondensation of a multifunctional aromatic amine and a multifunctional aromatic acid halide, wherein the crosslinked aromatic polyamide includes at least one of a fluorine atom bonded to an aromatic ring and a fluorine atom bonded to a nitrogen atom.

## Description

### TECHNICAL FIELD

The present invention relates to a gas separation membrane, a gas separation membrane element, and a gas separation device which are for separating light gases represented by helium and hydrogen from carbon dioxide with a polyamide composite membrane, and also to a gas separation method in which the separation membrane, element, and device are used.

### BACKGROUND ART

Hydrogen is nowadays attracting attention as a clean energy source. Hydrogen is obtained by gasifying a fossil fuel such as natural gas or coal to obtain a mixed gas including hydrogen and carbon dioxide as main components and removing the carbon dioxide from the mixed gas. The gas to be treated is characterized by having a high temperature and a high pressure because the gas has undergone stream reforming and water gas shift reactions.

For a method for obtaining a specific gas in a concentrated state from a mixed gas at low cost, a membrane separation method including selectively permeating a target gas by utilizing difference in material's gas permeability is attracting attention.

For example, Non-Patent Document 1 proposes a gas separation membrane with a high gas permeability due to inclusion of an extremely thin functional layer formed by a crosslinked aromatic polyamide formation by an interfacial polycondensation reaction.

### BACKGROUND ART DOCUMENTS

### NON-PATENT DOCUMENTS

Non-Patent Document 1: Albo and three others, Journal of Membrane Science, 449, 2014, pp. 109-118

### SUMMARY OF THE INVENTION

### PROBLEMS TO BE SOLVED

However, the crosslinked aromatic polyamides which have been known so far are low in hydrogen solubility therein and hence are poor in performance of selectively separating hydrogen from carbon dioxide. Hence, these polyamides have a problem in that it cannot efficiently remove carbon dioxide from a mixed gas including hydrogen and carbon dioxide.

The present invention has been made in view of the above current circumstances, and the object of the present invention is to provide a gas separation membrane which attains both permeability and separation selectivity of light gases, such as hydrogen and helium, a gas separation membrane element, a gas separation device, and a gas separation method.

### SOLUTION FOR PROBLEMS

In order to solve the above, the invention has the following constitution:
[1] A gas separation membrane including a porous support layer and a separation functional layer disposed on the porous support layer and containing a crosslinked aromatic polyamide obtained by polycondensation of a polyfunctional aromatic amine with a polyfunctional aromatic acid halide,
   the crosslinked aromatic polyamide containing aromatic-ring-bonded fluorine atoms and/or nitrogen-atom-bonded fluorine atoms.
[2] The gas separation membrane according to [1], in which the crosslinked aromatic polyamide, when analyzed by X-ray photoelectron spectroscopy (XPS), has a ratio of the number of fluorine atoms to the number of carbon atoms in the range of 0.001-0.12.
[3] The gas separation membrane according to [1] or [2], in which the crosslinked aromatic polyamide, when analyzed by X-ray photoelectron spectroscopy (XPS), has a ratio of the number of fluorine atoms to the number of carbon atoms in the range of 0.001-0.080.
[4] A gas separation membrane element including a gas-collecting pipe for collecting permeate gas, a feed-side channel member, a permeation-side channel member, and the gas separation membrane according to any one of [1] to [3],
   in which the gas separation membrane has been disposed between the feed-side channel member and the permeation-side channel member so that the surface of the separation functional layer included in the gas separation membrane faces the permeation-side channel member, and
   the gas separation membrane, the feed-side channel member, and the permeation-side channel member have been spirally wound around the gas-collecting pipe.
[5] A gas separation device including the gas separation membrane according to any one of [1] to [3].
[6] A gas separation method including (1) a step in which a mixed gas containing carbon dioxide is fed to one surface of a gas separation membrane and (2) a step in which a gas having a lower carbon dioxide concentration than the mixed gas is obtained through the other surface of the gas separation membrane,
   in which the gas separation membrane includes a porous support layer and a separation functional layer disposed on the porous support layer and containing a crosslinked aromatic polyamide obtained by polycondensation of a polyfunctional aromatic amine with a polyfunctional aromatic acid halide,
   the crosslinked aromatic polyamide containing aromatic-ring-bonded fluorine atoms and/or nitrogen-atom-bonded fluorine atoms.
[7] A gas separation method including (1) a step in which a mixed gas containing nitrogen is fed to one surface of a gas separation membrane and (2) a step in which a gas having a lower nitrogen concentration than the mixed gas is obtained through the other surface of the gas separation membrane,
   in which the gas separation membrane includes a porous support layer and
   a separation functional layer disposed on the porous support layer and containing a crosslinked aromatic polyamide obtained by polycondensation of a polyfunctional aromatic amine with a polyfunctional aromatic acid halide,
   the crosslinked aromatic polyamide containing aromatic-ring-bonded fluorine atoms and/or nitrogen-atom-bonded fluorine atoms.
[8] The gas separation method according to [6] or [7], in which the mixed gas includes hydrogen and/or helium.

### ADVANTAGES OF THE INVENTION

The present invention can provide a practical gas separation membrane having high gas permeability and separation selectivity, a gas separation membrane element, a gas separation device, and a gas separation method employing these.

### BRIEF DESCRIPTION OF THE DRAWINGS

[Fig. 1] Fig. 1 is a partly developed perspective view showing an embodiment of the gas separation membrane element of the present invention.
[Fig. 2] Fig. 2 is a schematic view of a device used in the Examples for measuring the gas permeability of each gas separation membrane.
[Fig. 3] Fig. 3 is a schematic view of a device used in the Examples for applying a pressure to each gas separation membrane.

### MODE FOR CARRYING OUT THE INVENTION

### 1. Gas Separation Membrane

The gas separation membrane at least includes a porous support layer and a separation functional layer. In this embodiment, the gas separation membrane includes a substrate, a porous support layer disposed on the substrate, and a separation functional layer disposed on the porous support layer. The substrate and the porous support layer have substantially no gas-separating ability and are used as a support (supporting membrane) for supporting the separation functional layer.

### (1-1) Substrate

Examples of the substrate include polyester-based polymers, polyamide-based polymers, polyolefin-based polymers, and mixtures or copolymers thereof. Especially preferred is fabric of a polyester-based polymer which is highly stable mechanically and thermally. Advantageously usable forms of the fabric are long-fiber nonwoven fabric, short-fiber nonwoven fabric, and woven or knit fabric. The term "long-fiber nonwoven fabric" means nonwoven fabric having an average fiber length of 300 mm or longer and an average fiber diameter of 3-30 µm.

The substrate preferably has an air permeability of 0.5-5.0 cc/cm²/sec. When the air permeability of the substrate is within that range, a polymer solution which is to form a porous support layer infiltrates into the substrate, hence, the adhesion between the porous support layer and the substrate can be improved and the physical stability of the supporting membrane can be enhanced.

The thickness of the substrate is preferably in the range of 10-200 µm, more preferably in the range of 30-120 µm.

In this description, the term "thickness" means average value unless otherwise indicated. The average value herein is arithmetic mean value.

Specifically, the thickness of the substrate and the thickness of the porous support layer, which will be described below, each is determined by examining a cross-section thereof to measure the thickness thereof at twenty points at intervals of 20 µm along the direction (plane direction of the membrane) perpendicular to the thickness direction and calculating an average of the twenty thickness values.

### (1-2) Porous Support Layer

The porous support layer is a layer which has substantially no gas-separating ability and which substantially imparts strength to the separation functional layer, which has a gas-separating ability.

The porous support layer is not particularly limited with regard to the pore diameter or pore distribution thereof. For example, the porous support layer may have an even pore diameter throughout, or the pore diameter thereof may gradually become larger from the surface on the side where the separation functional layer is formed to the other surface. It is preferable that the pore diameter thereof in the surface on the side where the separation functional layer is formed is 0.1-100 nm.

The porous support layer includes at least one polymer selected from the group consisting of homopolymers and copolymers, such as, for example, polysulfones, polyethersulfones, polyamides, polyesters, cellulosic polymers, vinyl polymers, poly(phenylene sulfide), poly(phenylene sulfide sulfone)s, poly(phenylene sulfone), poly(phenylene oxide), and the like.

Examples of the cellulosic polymers include cellulose acetate and cellulose nitrate. Examples of the vinyl polymers include polyethylene, polypropylene, poly(vinyl chloride), and polyacrylonitrile.

The porous support layer preferably includes a homopolymer or copolymer such as a polysulfone, polyamide, polyester, cellulose acetate, cellulose nitrate, poly(vinyl chloride), polyacrylonitrile, poly(phenylene sulfide), poly(phenylene sulfide sulfone), or poly(phenylene sulfone).

More preferably, the porous support layer includes cellulose acetate, a polysulfone, a poly(phenylene sulfide sulfone), or poly(phenylene sulfone). Especially preferred of these materials are the polysulfones because these polymers are highly stable chemically, mechanically and thermally and are easy to mold.

Specifically, the porous support layer preferably includes a polysulfone made up of repeating units represented by the following chemical formula. In the porous support layer including this polysulfone, it is easy to control the pore diameter thereof and this porous support layer has high dimensional stability. Symbol n in the following formula means the number of repetitions.

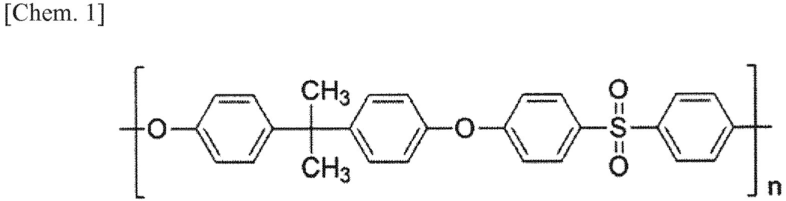

The polysulfone has a weight-average molecular weight (Mw) of preferably 10,000-200,000, more preferably 15,000-100,000, as determined by gel permeation chromatography (GPC) using N-methylpyrrolidone as a solvent and using polystyrene as a reference material. When the polysulfone has the Mw of 10,000 or higher, a porous support layer having preferred mechanical strength and heat resistance can be obtained. When the polysulfone has the Mw of 200,000 or less, this polysulfone gives solutions viscosities within an appropriate range and can provide satisfactory moldability.

It is preferable that the porous support layer includes the polymer described above as a main component. Specifically, the proportion of the polymer described above (in the case where a plurality of polymers of the kind described above are contained, the sum of the proportions of these polymers) in the porous support layer is preferably 70% by weight or higher, more preferably 80% by weight or higher, still more preferably 90% by weight or higher. Most preferably, the porous support layer is composed of the above-described polymer only.

The thicknesses of the substrate and porous support layer affect the mechanical strength of the gas separation membrane and the packing density of the gas separation membrane incorporated into an element. To obtain sufficient mechanical strength and packing density, the total thickness of the substrate and porous support layer is preferably 30-300 µm, more preferably 100-220 µm.

The thickness of the porous support layer is preferably 20-100 µm.

The porous support layer to be used in the present invention can be selected from among various commercially available products such as "Millipore Filter VSWP" (trade name), manufactured by Millipore Corp., and "Ultra Filter UK10" (trade name), manufactured by Toyo Roshi Ltd. Alternatively, the porous support layer can be produced by the method described in Office of Saline Water Research and Development Progress Report, No. 359 (1968).

### (1-3) Separation Functional Layer

The separation functional layer includes a crosslinked aromatic polyamide (hereinafter often referred to simply as "polyamide") obtained by a polycondensation reaction between a polyfunctional aromatic amine and a polyfunctional aromatic acid halide.

In other words, the separation functional layer includes a crosslinked aromatic polyamide including both a portion derived from a polyfunctional aromatic amine and a portion derived from a polyfunctional aromatic acid halide. The "portion derived from a polyfunctional aromatic amine" is the portion of a polyfunctional aromatic amine excluding the functional groups contributing to bond formation in the polycondensation. Likewise, the "portion derived from a polyfunctional aromatic acid halide" is the portion of a polyfunctional aromatic acid halide excluding the functional groups contributing to bond formation in the polycondensation.

The term "polycondensation reaction" means interfacial polycondensation.

The term "polyfunctional aromatic amine" means an aromatic amine having two or more amino groups in the molecule, and at least one of the amino groups being a primary amino group.

Examples of the polyfunctional aromatic amine include: polyfunctional aromatic amines including an aromatic ring having two amino groups bonded thereto in ortho, meta, or para positions, such as o-phenylenediamine, m-phenylenediamine, p-phenylenediamine, o-xylylenediamine, m-xylylenediamine, p-xylylenediamine, o-diaminopyridine, m-diaminopyridine, and p-diaminopyridine; and polyfunctional aromatic amines such as 1,3,5-triaminobenzene, 1,2,4-triaminobenzene, 3,5-diaminobenzoic acid, 3-aminobenzylamine, 4-aminobenzylamine, 2,4-diaminothioanisole, 1,3-diaminothioanisole, 1,3-diamino-5-(dimethylphosphino)benzene, (3,5-diaminophenyl)dimethylphosphine oxide, (2,4-diaminophenyl)dimethylphosphine oxide, 1,3-diamino-5-(methylsulfonyl)benzene, 1,3-diamino-4-(methylsulfonyl)benzene, 1,3-diamino-5-nitrosobenzene, 1,3-diamino-4-nitrosobenzene, 1,3-diamino-5-(hydroxyamino)benzene, and 1,3-diamino-4-(hydroxyamino)benzene.

In view of the separation selectivity, permeability, and heat resistance of the membrane, the polyfunctional aromatic amine is preferably an aromatic amine having two to four amino groups in the molecule, and at least one of which is a primary amino group, among those polyfunctional aromatic amines. Preferred are m-phenylenediamine, p-phenylenediamine, and 1,3,5-triaminobenzene. It is more preferred to use m-phenylenediamine, among these, because of availability and handleability. One of those polyfunctional aromatic amines may be used alone, or two or more thereof may be used in combination.

Meanwhile, the term "polyfunctional aromatic acid halide", which is also referred to as a polyfunctional aromatic carboxylic acid derivative, means an aromatic acid halide having at least two halogenated carbonyl groups in the molecule.

Examples of the polyfunctional aromatic acid halide include trifunctional acid halides such as trimesoyl chloride and bifunctional acid halides such as biphenyldicarbonyl dichloride, azobenzenedicarbonyl dichloride, terephthaloyl chloride, isophthaloyl chloride, and naphthalenedicarbonyl chloride.

In view of reactivity with the polyfunctional aromatic amine, it is preferable that the polyfunctional aromatic acid halide is a polyfunctional aromatic acid chloride. Further, in view of the separation selectivity and heat resistance of the membrane, the polyfunctional aromatic acid halide preferably is a polyfunctional aromatic acid chloride having two to four chlorocarbonyl groups in the molecule. It is more preferred to use trimesoyl chloride among these because of availability and handleability. One of these polyfunctional aromatic acid halides may be used alone, or two or more thereof may be used in combination.

It is preferable that the polyfunctional aromatic amine and/or the polyfunctional aromatic acid halide includes a compound having a functionality of 3 or higher.

The separation functional layer preferably includes, as a main component, a crosslinked aromatic polyamide obtained by a polycondensation reaction between the polyfunctional aromatic amine and the polyfunctional aromatic acid halide. Specifically, the proportion of the crosslinked aromatic polyamide in the separation functional layer is preferably 50% by weight or higher, more preferably 70% by weight or higher, still more preferably 90% by weight or higher, and the separation functional layer may be composed of the crosslinked aromatic polyamide only. When the separation functional layer includes the crosslinked aromatic polyamide in an amount of 50% by weight or larger, this separation functional layer is apt to exhibit high membrane performance.

The separation functional layer usually has a thickness in the range of 0.01-1 µm, preferably in the range of 0.1-0.5 µm, for obtaining sufficient gas-separating ability and gas permeability.

The crosslinked aromatic polyamide to be used in the present invention contains aromatic-ring-bonded fluorine atoms and/or nitrogen-atom-bonded fluorine atoms.

Each aromatic ring having a fluorine atom bonded thereto may be either one derived from the aromatic amine, or one derived from the acid halide, of the monomers used for forming the polyamide.

Fluorine has a high affinity for light gases such as hydrogen and helium. Because of this, the presence of fluorine atoms on the aromatic rings and/or nitrogen atoms of the polyamide improves the solubility of light gases in the polyamide. In addition, the introduced fluorine atoms serve as a steric hindrance to inhibit carbon dioxide and nitrogen, which have larger molecular sizes than the light gases, from passing through the layer. Consequently, the separation selectivity regarding the separation of light gases from carbon dioxide and nitrogen is improved.

From the standpoint of attaining both light-gas permeability and separation selectivity, the crosslinked aromatic polyamide, when analyzed by X-ray photoelectron spectroscopy (XPS), has a ratio of the number of fluorine atoms to the number of carbon atoms [(number of fluorine atoms)/(number of carbon atoms)] preferably in the range of 0.001-0.12, more preferably in the range of 0.001-0.080.

When the ratio thereof is 0.001 or larger, the polyamide has reduced cohesiveness to show improved separation selectivity. When the ratio thereof is 0.12 or less, the gas separation membrane is less apt to have defects even when pressurized. Further, when the ratio thereof is 0.080 or less, the gas separation membrane can retain constant performance even when pressurized.

For the X-ray photoelectron spectroscopy (XPS), any of the methods for X-ray photoelectron spectroscopy (XPS) shown as examples in Journal of Polymer Science, Vol.26, 559-572 (1988) and Nihon Setchaku Gakkai Shi, Vol.27, No.4 (1991) can be used.

The crosslinked aromatic polyamide may include a portion derived from a monofunctional aromatic acid halide, as will be described later. The "portion derived from a monofunctional aromatic acid halide" is the portion of a monofunctional aromatic acid halide excluding the functional group contributing to bond formation in the polycondensation.

### 2. Process for producing the Gas Separation Membrane

A process for producing the gas separation membrane is explained next.

### (2-1) Formation of Supporting Membrane

In this embodiment, a supporting membrane including a multilayer structure consisting of a substrate and a porous support layer is formed first.

A method for forming the supporting membrane, for example, includes: step 1, in which a polymer that is a component constituting a porous support layer is dissolved in a good solvent for the polymer to prepare a polymer solution; step 2, in which the polymer solution is applied to a substrate; and step 3, in which the polymer solution is immersed in a coagulating bath to wet-coagulate the polymer.

Examples of the good solvent to be used in step 1 include: N-methyl-2-pyrrolidone (NMP); tetrahydrofuran; dimethyl sulfoxide; amides such as tetramethylurea, N,N-dimethylacetamide, and N,N-dimethylformamide (hereinafter referred to as "DMF"); lower alkyl ketones such as acetone and methyl ethyl ketone; esters and lactones, such as trimethyl phosphate and γ-butyrolactone; and mixed solvents composed of two or more thereof.

In the case of using a polysulfone for forming the porous support layer in step 1, the polysulfone is dissolved in DMF to obtain a polymer solution.

The concentration of the polymer in the polymer solution in step 1 is preferably 10-25% by weight, more preferably 13-22% by weight. When the concentration of the polymer is 10% by weight or higher, this polymer solution has a high viscosity and the porous support layer can be controlled so as to have a desired thickness. When the concentration of the polymer is 25% by weight or less, a dense layer in the porous support layer account for a smaller proportion, and the porous support layer can retain an amount of an aqueous solution of a polyfunctional aromatic amine necessary in producing the separation functional layer.

Examples of methods for applying the polymer solution to a substrate in step 2 include various coating techniques. It is, however, preferred to use a pre-metered coating method capable of feeding the polymer solution in an accurate amount, such as die coating, slide coating, or curtain coating.

In step 3, the polymer solution is immersed in a coagulating bath to wet-coagulate the polymer, water is preferably used for the coagulating bath. The temperature of the coagulating bath is preferably 5-50°C, more preferably 10-30°C. When the temperature thereof is 5°C or higher, a sufficiently high coagulation rate is achieved, resulting in satisfactory membrane formation efficiency. When the temperature thereof is 50°C or lower, surface vibrations of the coagulating bath due to thermal movement are not intensified and the membrane thus formed has satisfactory surface smoothness. The time period of immersing the polymer solution in the coagulating bath is preferably 3 seconds to 30 minutes, more preferably 5 seconds to 20 minutes, from the standpoint of coagulation rate.

### (2-2) Method for producing the Separation Functional Layer

Next, steps for forming the separation functional layer as a component of the gas separation membrane are explained. The steps for forming the separation functional layer include:
(a) a step in which an aqueous solution containing a polyfunctional aromatic amine is brought into contact with the surface of the porous support layer of the supporting membrane; and
(b) a step in which an organic-solvent solution containing a polyfunctional aromatic acid halide is brought into contact with the porous support layer with which the aqueous solution containing a polyfunctional aromatic amine has been brought into contact.

The steps for forming the separation functional layer further satisfy at least one of the following requirements:
- in (a) above, the aqueous solution contains a polyfunctional aromatic amine including an aromatic ring having one or more fluorine atoms bonded thereto (requirement 1);
- in (b) above, the organic-solvent solution contains a monofunctional or polyfunctional aromatic acid halide including an aromatic ring having one or more fluorine atoms bonded thereto (requirement 2); and
- step (b) is followed by a treatment for introducing fluorine atoms onto aromatic rings and/or nitrogen atoms contained in the polyamide (requirement 3).

Preferred examples of the polyfunctional aromatic amine including an aromatic ring having one or more fluorine atoms bonded thereto include 1,3-diaminotetrafluorobenzene, 1,4-diamino-2-fluorobenzene, 2,3,5,6-tetrafluoro-1,4-phenylenediamine, 2,4,5-trifluoro-1,4-phenylenediamine, and 2,5-difluoro-1,4-phenylenediamine.

Preferred examples of the monofunctional or polyfunctional aromatic acid halide including an aromatic ring having one or more fluorine atoms bonded thereto include o-fluorobenzoyl chloride, p-fluorobenzoyl chloride, m-fluorobenzoyl chloride, pentafluorobenzoyl chloride, 3,5-difluorobenzoyl chloride, 2,4,6-trifluorobenzoyl chloride, tetrafluoroisophthaloyl chloride, and tetrafluoroterephthaloyl chloride.

The steps are explained below in order.

In step (a), the concentration of the polyfunctional aromatic amine in the aqueous solution thereof (hereinafter often referred to as "aqueous polyfunctional-aromatic-amine solution") is preferably in the range of 0.1-20% by weight, more preferably in the range of 0.5-15% by weight. When the concentration of the polyfunctional aromatic amine is within the range, sufficient solute-removing ability and water permeability can be obtained.

The aqueous polyfunctional-aromatic-amine solution may contain a surfactant, organic solvent, alkaline compound, antioxidant, etc. so long as these ingredients do not inhibit the reaction between the polyfunctional aromatic amine and the polyfunctional aromatic acid halide. Surfactants have the effect of improving the wettability of the surface of the supporting membrane to lower interfacial tension between the aqueous polyfunctional-aromatic-amine solution and nonpolar solvents. Some organic solvents act as catalysts for the interfacial polycondensation reaction, and addition thereof sometimes enables efficient interfacial polycondensation reaction.

It is preferable that the aqueous polyfunctional-aromatic-amine solution is brought into contact with the surface of the porous support layer of the supporting membrane evenly and continuously. Specific examples include a method in which the aqueous polyfunctional-aromatic-amine solution is applied to the porous support layer of the supporting membrane and a method in which the porous support layer of the supporting membrane is immersed in the aqueous polyfunctional-aromatic-amine solution. The time period during which the porous support layer of the supporting membrane is in contact with the aqueous polyfunctional-aromatic-amine solution is preferably 1 second to 10 minutes, more preferably 10 seconds to 3 minutes.

After the contact of the aqueous polyfunctional-aromatic-amine solution with the porous support layer of the supporting membrane, the excess solution is sufficiently removed not to allow droplets to remain on the membrane. If the excess solution is fully removed, a trouble that droplets remaining portions become membrane defects through the formation of a separation functional layer, and the membrane performance is deteriorated, can be avoided. Examples of methods for the excess-solution removal include: a method in which the supporting membrane which has been contacted with the aqueous polyfunctional-aromatic-amine solution is held vertically to make the excess solution flow down naturally, as described, for example, in JP-A-2-78428; and a method in which a stream of a gas, e.g., nitrogen, is blown against the surface of the porous support layer from an air nozzle to forcedly remove the excess solution. After the excess-solution removal, the membrane surface may be dried to remove some of the water contained in the aqueous solution.

In step (b), the concentration of the polyfunctional aromatic acid halide in the organic-solvent solution thereof is preferably in the range of 0.01-10% by weight, more preferably in the range of 0.02-2.0% by weight. The reasons for this are as follows. By setting the concentration thereof to 0.01% by weight or higher, a sufficient reaction rate is obtained, and by setting the concentration thereof to 10% by weight or less, the occurrence of side reactions can be inhibited. It is more preferred to incorporate an acylation catalyst such as DMF into this organic-solvent solution, because the interfacial polycondensation is accelerated.

When the organic-solvent solution contains a monofunctional aromatic acid halide including an aromatic ring having one or more fluorine atoms bonded thereto, the concentration of the monofunctional aromatic acid halide in the organic-solvent solution is preferably in the range of 0.005-1% by weight, more preferably in the range of 0.01-0.2% by weight.

The organic solvent in the organic-solvent solution is desirably a water-immiscible organic solvent which dissolves the polyfunctional aromatic acid halide and does not damage the supporting membrane. Any such organic solvent which is inert to the polyfunctional aromatic amine compound and the polyfunctional aromatic acid halide may be used. Preferred examples thereof include hydrocarbon compounds such as n-hexane, n-octane, n-decane, and isooctane.

For bringing the organic-solvent solution containing the polyfunctional aromatic acid halide into contact with the porous support layer with which the aqueous solution of a polyfunctional aromatic amine compound has been brought into contact, the same method as that used for bringing the aqueous polyfunctional-aromatic-amine solution into contact with the porous support layer may be employed.

In this step, the porous support layer with which the organic-solvent solution containing the polyfunctional aromatic acid halide has been brought into contact may be heated. The temperature at which the porous support layer is heated is 50-180°C, preferably 60-160°C. By heating the porous support layer at 60°C or higher, the decrease in reactivity due to monomer consumption in the interfacial polymerization reaction can be compensated for by the reaction-accelerating effect of heat. By heating the porous support layer at 160°C or lower, considerable decrease in the reaction efficiency due to complete volatilization of the solvent can be prevented.

The heating time is preferably 5-180 seconds. By setting the heating time to 5 seconds or longer, a reaction-accelerating effect can be obtained. By setting the heating time to 180 seconds or less, complete volatilization of the solvent can be prevented.

When at least one of requirements 1 and 2 is satisfied, a separation functional layer usable in the present invention is obtained. When neither requirement 1 nor requirement 2 is satisfied, a chemical treatment is given to aromatic rings and/or nitrogen atoms contained in the obtained polyamide. Thus, fluorine atoms can be introduced.

Specifically, it is preferred to bring a fluorinating agent into contact with the gas separation membrane including the polyamide. Examples of the fluorinating agent include 1-chloromethyl-4-fluoro-1,4-diazoniabicyclo[2.2.2]octane bis(tetrafluoroborate) (Selectfluor (registered trademark)), N-fluorobenzenesulfonimide, and 1-fluoropyridinium tetrafluoroborate.

Means for reacting the fluorinating agent with the polyamide are not particularly limited. For example, preferred is a method in which the gas separation membrane including the polyamide is immersed in an aqueous solution containing the fluorinating agent (hereinafter often referred to as "aqueous fluorinating-agent solution").

The concentration of the fluorinating agent in the aqueous fluorinating-agent solution is preferably 0.01-10% by weight, more preferably 0.1-1% by weight.

A desirable method for the chemical treatment is to conduct the treatment while setting the temperature of the aqueous fluorinating-agent solution to 10-100°C, more preferably 20-80°C. By setting the temperature thereof to 10°C or higher, the efficiency of the reaction can be improved. By setting the temperature thereof to 100°C or lower, decomposition of the fluorinating agent can be inhibited.

The time period during which the aqueous fluorinating-agent solution is in contact with the gas separation membrane including the polyamide is preferably 30 seconds to 1 day, and is more preferably 1-30 minutes, considering attainment of both suitability for practical use and reaction efficiency.

The presence of the fluorine atoms can be determined by analyzing the polyamide by X-ray photoelectron spectroscopy (XPS). Specifically, the presence thereof can be determined by using any of the methods for X-ray photoelectron spectroscopy (XPS) shown as examples in Journal of Polymer Science, Vol.26, 559-572 (1988) and Nihon Setchaku Gakkai Shi, Vol.27, No.4 (1991).

The fluorine-atom 1s peak obtained by XPS is assigned to the inner-shell electrons of the fluorine atom. Since a peak assigned to CF is observed at 686 eV, whether or not fluorine atoms have been introduced onto aromatic rings and/or nitrogen atoms contained in the polyamide can be determined based on the presence or absence of that peak.

By forming a separation functional layer on the supporting membrane including the porous support layer in the manner described above, a gas separation membrane is obtained.

It is preferred to dry the thus-obtained gas separation membrane. Methods for the drying are not particularly limited. A method in which the water is removed by vacuum drying, freeze drying, or high-temperature heating or a method in which the gas separation membrane is immersed in an alcohol solvent, such as ethanol or isopropanol, or a hydrocarbon solvent to replace the water with the solvent and thereafter the solvent is removed under those drying conditions may be used.

Preferred of these is high-temperature heating, by which a dense separation functional layer is obtained especially easily. Although methods for the high-temperature heating are not particularly limited, it is desirable to heat the gas separation membrane in an oven at 30-200°C, more preferably 50-150°C, for 1 minute or longer. By conducting the heating at 30°C or higher, the water is efficiently removed. By conducting the heating at 200°C or lower, a deformation of the gas separation membrane can be prevented due to a difference in the coefficient of thermal shrinkage between the separation functional layer and the substrate.

### 3. Gas Separation Membrane Element

### (3-1) Overview

The gas separation membrane element of the present invention includes a gas-collecting pipe for collecting permeate gas, a feed-side channel member, a permeation-side channel member, and the gas separation membrane of the present invention.

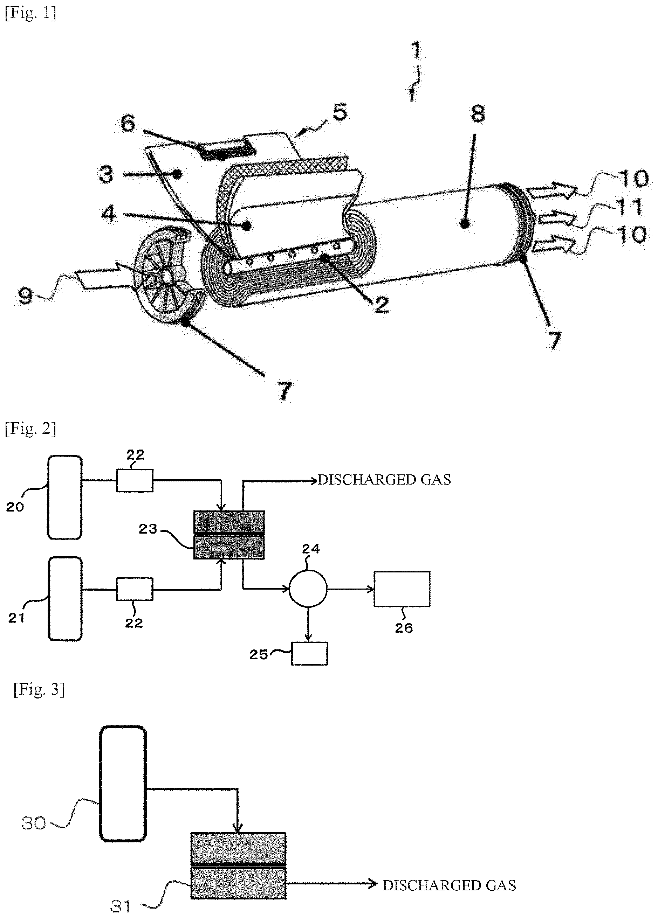

Fig. 1 shows an embodiment of the gas separation membrane element of the present invention, and it is a partly developed view illustrating a gas separation membrane element 1.

As Fig. 1 shows, the gas separation membrane element 1 includes a gas-collecting pipe 2, gas separation membranes 3, feed-side channel members 4, and permeation-side channel members 6. The gas separation membranes 3, the feed-side channel members 4, and the permeation-side channel members 6 are spirally wound around the gas-collecting pipe 2.

The gas separation membranes 3 are wound around the gas-collecting pipe 2 so that the width direction of the gas separation membranes 3 is arranged to extend along the longitudinal direction of the gas-collecting pipe 2. As a result, the gas separation membranes 3 have been disposed so that the longitudinal direction thereof is arranged to extend along the winding direction.

In this description, the expression "inner end along the winding direction" means the end of a gas separation membrane 3 which is located nearer the gas-collecting pipe 2.

### (3-2) Gas-collecting Pipe

The gas-collecting pipe 2 is an example of a center pipe for collecting a permeate gas 11. The gas-collecting pipe 2 is only required to be configured so that the permeate gas 11 flows through the inside thereof, and is not particularly limited in the material, shape, size, etc. However, with respect to the material, it is preferred to use a gas-collecting pipe made of metal, e.g., SUS (stainless used steel), aluminum, copper, brass, or titanium, from the standpoints of pressure resistance and heat resistance. With respect to shape, a cylindrical member having a sidewall in which a plurality of holes have been formed may be used.

### (3-3) Gas Separation Membrane

The plurality of gas separation membranes 3 have been wound around the gas-collecting pipe 2. Each gas separation membrane 3 is disposed between a feed-side channel member 4 and a permeation-side channel member 6 so that the surface of the separation functional layer included in the gas separation membrane 3 faces the permeation-side channel member 6.

Specifically, the gas separation membrane 3 is folded so that the feed-side surface thereof faces itself. The gas separation membrane 3 which is thus folded is superposed on another gas separation membrane 3 which also is likewise folded. Thus, the two gas separation membranes 3 are disposed so that the permeation-side surface of one gas separation membrane 3 faces the permeation-side surface of the other gas separation membrane 3.

In the thus-stacked gas separation membranes 3, the three sides, excluding the inner end along the winding direction, that surround the space between the permeation-side surfaces are sealed. The gas separation membranes 3 in which edges of the space between the permeation-side surfaces have been thus sealed up are called an envelope membrane and reference numeral "5" is assigned.

The envelope membrane 5 is a pair of two gas separation membrane sheets disposed so that the permeation-side surfaces thereof face each other. The envelope membrane 5 has a rectangular shape, and the space between the permeation-side surfaces of the rectangular gas separation membranes 3 is open only at the winding-direction inner side and is sealed up at the other three sides so that a permeate gas 11 flows into the gas-collecting pipe 2. The permeate gas 11 is isolated from the feed gas 9 by the envelope membrane 5.

Examples of sealed states include a state in which the sides are bonded with an adhesive, a hot-melt adhesive, or the like, a state in which the sides are fusion-bonded by heating or with a laser, etc., and a state in which a rubber sheet is sandwiched. The sealing with an adhesive is especially preferred because this is the simplest and highly effective.

In the examples described above, the inner end, along the winding direction, of the feed-side surface of the gas separation membrane is closed by folding. However, this portion may be sealed not by folding but by bonding, fusion bonding, etc. In cases when that portion of the feed-side surface of the gas separation membrane is sealed without being folded, the gas separation membrane is less apt to suffer bending at the end. Since the occurrence of bending at around a fold is inhibited, such gas separation membranes, after having been wound, are inhibited from having gaps therebetween and from suffering a leakage due to the gaps.

The stacked gas separation membranes may have the same configuration or different configurations.

The gas separation membrane sheets in which the permeation-side or feed-side surface of one of the sheets faces that of the other may be two gas separation membranes or may be one gas separation membrane which has been folded.

Inside the envelope membrane 5, a permeation-side channel member 6 is disposed. Meanwhile, a feed-side channel member 4 is disposed between two adjacent envelope membranes 5.

### (3-4) Permeation-side Channel Member

The gas separation membrane element 1 includes permeation-side channel members 6.

Suitable for use as the permeation-side channel members 6 are ones having a net shape. The permeation-side channel members 6 are not particularly limited in the material thereof, which can be selected from: metals such as SUS, aluminum, copper, brass, and titanium; and polymers such as urethane resins, epoxy resins, polyethersulfones, polyacrylonitrile, poly(vinyl chloride), poly(vinylidene chloride), poly(vinyl alcohol), ethylene/vinyl alcohol copolymers, poly(phenylene sulfide), polystyrene, styrene/acrylonitrile copolymers, styrene/butadiene/acrylonitrile copolymers, polyacetals, poly(methyl methacrylate), methacrylic/styrene copolymers, cellulose acetate, polycarbonates, poly(ethylene terephthalate), poly(butadiene terephthalate), and fluororesins (e.g., trifluorochloroethylene, poly(vinylidene fluoride), tetrafluoroethylene, tetrafluoroethylene/hexafluoropropylene copolymers, tetrafluoroethylene/perfluoroalkoxyethylene copolymers, and tetrafluoroethylene/ethylene copolymers). One of these materials may be used alone, or a mixture of two or more thereof may be used. Each permeation-side channel member 6 forms a permeation-side channel inside the envelope membrane, i.e., between the opposed permeation-side surfaces of gas separation membranes.

### (3-5) Feed-side Chanel Member

The gas separation membrane element 1 includes feed-side channel members 4 each disposed between the opposed feed-side surfaces of gas separation membranes 3, as shown in Fig. 1.

The feed-side channel members 4 may be any channel members as long as it can secure spaces, through which a mixed gas can pass while the gas being in contact with the gas separation membranes 3, between the gas separation membranes 3.

The height (thickness) of the feed-side channel members 4 is preferably larger than 0.5 mm but not larger than 2.0 mm, more preferably 0.6-1.0 mm, from the standpoints of balance among performances and of operation cost.

The feed-side channel members 4 are not particularly limited in the shape thereof. Examples thereof include members such as films and nets. The feed-side channel members 4 are not particularly limited in the material thereof, which can be selected from: metals such as SUS, aluminum, copper, brass, and titanium; and polymers such as urethane resins, epoxy resins, polyethersulfones, polyacrylonitrile, poly(vinyl chloride), poly(vinylidene chloride), poly(vinyl alcohol), ethylene/vinyl alcohol copolymers, poly(phenylene sulfide), polystyrene, styrene/acrylonitrile copolymers, styrene/butadiene/acrylonitrile copolymers, polyacetals, poly(methyl methacrylate), methacrylic/styrene copolymers, cellulose acetate, polycarbonates, poly(ethylene terephthalate), poly(butadiene terephthalate), and fluororesins (e.g., trifluorochloroethylene, poly(vinylidene fluoride), tetrafluoroethylene, tetrafluoroethylene/hexafluoropropylene copolymers, tetrafluoroethylene/perfluoroalkoxyethylene copolymers, and tetrafluoroethylene/ethylene copolymers). One of these materials may be used alone, or a mixture of two or more thereof may be used. The material of the feed-side channel members 4 may be the same as any of the materials of the gas separation membranes 3 or may be different from these.

### (3-6) Other Constituent Elements

Besides having the configuration described above, the gas separation membrane element 1 further includes the following configuration.

Namely, the gas separation membrane element 1 is equipped at both ends (i.e., a first end and a second end) with perforated end plates 7 which have a plurality of holes therein that allow a feed gas 9 to pass therethrough. In the gas separation membrane element 1, an armoring material 8 has been wound around the peripheral surface of the wound separation membranes (hereinafter referred to as "spiral").

### 4. Gas Separation Device

The gas separation membrane and gas separation membrane element of the present invention are applicable to a gas separation device capable of gas separation and purification. Namely, the gas separation device of the present invention includes the gas separation membrane and gas separation membrane element of the present invention.

The gas separation device of the present invention includes: a mixed-gas feed part for sending a mixed gas into the feed side of the gas separation membrane element; a recovery part for recovering a gas which has been separated from the mixed gas by the gas separation membrane element (i.e., which has passed through the separation membranes) from the permeation side of the gas separation membrane element; and a discharge part for discharging the gas that has not passed through the separation membranes from the feed side of the gas separation membrane element to the outside of the gas separation device.

The gas separation device of the present invention may include, besides those parts, a sweep-gas feed part for sending a sweep gas to the permeation side of the gas separation membrane element.

The gas separation device of the present invention more specifically can include a housing for housing the gas separation membrane element therein, piping, a vacuum pump, a compressor, a heat exchanger, a condenser, a heater, a chiller, a desulfurizer, a dehydrator, a dust-collecting filter, etc.

### 5. Gas Separation Method

The gas separation membrane described above can be utilized in a gas separation method for removing carbon dioxide or nitrogen.

Namely, the gas separation method according to the present invention includes
(1) a step in which a mixed gas containing carbon dioxide or nitrogen is fed to one surface of the gas separation membrane and
(2) a step in which a gas having a lower carbon dioxide concentration or nitrogen concentration than the mixed gas is obtained through the other surface of the gas separation membrane.

In this description, the gas which has passed through the gas separation membrane, i.e., the gas having a lower carbon dioxide concentration or nitrogen concentration, is referred to as a "permeate gas", while the gas which did not pass through and remains on the side of said one surface of the gas separation membrane is called a "concentrated gas".

In the gas separation method of the present invention, the gas separation membrane element of the present invention can be used.

In the gas separation method of the present invention, a gas separation membrane module including a pressure vessel and gas separation membrane elements of the present invention which have been connected to each other serially or in parallel and disposed in the pressure vessel can be used.

The gas separation membrane, gas separation membrane element, and gas separation membrane module described above (hereinafter sometimes referred to as "gas separation membrane and the like") can be used for separating a specific gas from a mixed gas, by feeding the mixed gas thereto to separate the mixed gas into a permeate gas and a concentrated gas. In this operation, the mixed gas may be pressurized with a compressor and fed to the gas separation membrane and the like or the permeation side of the gas separation membrane and the like may be depressurized with a pump, or both the pressurization and the depressurization may be performed.

Furthermore, the gas separation membrane elements or gas separation membrane modules may be disposed in a plurality of stages to conduct gas separation. When the gas separation membrane elements or gas separation membrane modules are disposed in a plurality of stages, either the concentrated gas or permeate gas from the preceding gas separation membrane module may be fed to the succeeding gas separation membrane module.

The concentrated gas or permeate gas from the succeeding gas separation membrane module may be mixed with a feed gas to be fed to the preceding gas separation membrane module. When a permeate gas or concentrated gas is fed to a succeeding gas separation membrane module, the gas may be pressurized with a compressor.

The feed pressure for the mixed gas is not particularly limited, but is preferably 0.1-10 MPa. By setting the feed pressure to 0.1 MPa or higher, the mixed gas permeates in an increased permeation rate. By setting the feed pressure to 10 MPa or less, members including the gas separation membrane and the like can be prevented from being deformed by pressure.

The ratio between the feed-side pressure and the permeation-side pressure (feed-side pressure)/ (permeation-side pressure) is not particularly limited. However, the pressure ratio is preferably 2-20. By setting the pressure ratio to 2 or larger, the permeation rate of the mixed gas can be increased. By setting the pressure ratio to 20 or less, the cost of operating the feed-side compressor or permeation-side pump can be reduced.

The feed temperature of the mixed gas, although not particularly limited, is preferably 0-200°C, more preferably 25-180°C. By setting the temperature thereof to 0°C or higher, satisfactory gas permeability is obtained. By setting the temperature thereof to 200°C or lower, the members of the gas separation membrane module can be prevented from being thermally deformed.

It is preferable that the mixed gas includes one or more light gases, in particular, hydrogen and/or helium. The gas separation membrane of the present invention has a large difference between permeability to hydrogen and helium and permeability to carbon dioxide and nitrogen. Consequently, when the mixed gas includes hydrogen and/or helium, carbon dioxide and nitrogen can be efficiently removed by the gas separation membrane of the present invention.

Next, the gas separation method employing the gas separation membrane element 1 is explained with reference to Fig. 1. A feed gas 9 fed through the first end of the gas separation membrane element 1 passes through the holes of the perforated end plate 7 and flows into feed-side channels. The feed gas 9 which has thus come into contact with the feed-side surfaces of the gas separation membranes 3 is separated into a permeate gas 11 and a concentrated gas 10 by the gas separation membranes 3.

The permeate gas 11 passes through permeation-side channels and flows into the gas-collecting pipe 2. The permeate gas 11 which has passed through the gas-collecting pipe 2 flows out of the gas separation membrane element 1 through the second end of the gas separation membrane element 1. The concentrated gas 10 passes though the feed-side channels and flows out of the gas separation membrane element 1 through the holes of the perforated end plate 7 disposed at the second end. Thus, the feed gas 9 (mixed gas) can be separated into the permeate gas 11 and the concentrated gas 10.

### EXAMPLES

The present invention is explained below in more detail by reference to Examples, but the invention is not limited by the following Examples in any way.

### (Ratio of the Number of Fluorine Atoms to the Number of Carbon Atoms in Crosslinked Aromatic Polyamides)

The number of fluorine atoms and the number of carbon atoms in the crosslinked aromatic polyamide contained in the separation functional layer of each of the gas separation membranes obtained in the Examples and Comparative Examples were calculated from results obtained by X-ray photoelectron spectroscopy (XPS) under the following measuring conditions.
Measuring device: Quantera SXM (manufactured by PHI, Inc.)
Excitation X-ray: monochromatic Al Kα_{1,2} ray (1,486.6 eV)
X-ray diameter: 0.2 mm

From an intensity ratio between the F 1s peak and the C 1s peak, the ratio of the number of fluorine atoms to the number of carbon atoms [(number of fluorine atoms)/ (number of carbon atoms)] was determined. Values thereof below 0.001 were regarded as below a detection limit. The results are shown in Table 1.

### (Determination of Gas Permeability)

Each of the gas separation membranes obtained in the Examples and Comparative Examples was examined for gas permeability using the device shown in Fig. 2, in accordance with JIS K 7126-2B.

Specifically, a permeation cell 23 in which a gas separation membrane having an effective membrane area of 25 cm² had been set to partition the cell 23 into two cells, i.e., a feed-side cell and a permeation-side cell, was kept at a temperature of 80°C. Hydrogen, carbon dioxide, or nitrogen was caused to flow as a permeate gas into the feed-side cell from a feed-gas cylinder 20 at 1 atm while controlling the flow rate thereof with a mass-flow controller 22. Argon was caused to flow as a sweep gas into the permeation-side cell from a sweep-gas cylinder 21 at 1 atm while controlling the flow rate thereof with a mass-flow controller 22.

A mixture of the permeation gas and the sweep gas was first sent to a gas chromatograph 25 equipped with a TCD (thermal conductivity detector) by operating a valve 24, and the concentration of the permeate gas in the mixture was determined. Subsequently, the valve 24 was operated and the flow rate of the mixture of the permeate gas and the sweep gas was measured with a soap-film flow meter 26. The permeability to each of hydrogen, carbon dioxide, and nitrogen was calculated from the measured flow rate and the determined permeate-gas concentration. The permeability to hydrogen is shown in Table 1.

### (Calculation of H₂/CO₂ Selectivity and H₂/N₂ Selectivity)

H₂/CO₂ selectivity and H₂/N₂ selectivity were calculated by dividing the permeability to hydrogen by the permeability to carbon dioxide and the permeability to nitrogen, respectively. The results are shown in Table 1.

### (Performance after Application of Pressure of 1 MPa)

After the determination of gas permeability, each gas separation membrane was taken out of the permeation cell 23 and pressurized using the device shown in Fig. 3. Specifically, the gas separation membrane was placed in a cell 31 having an effective membrane area of 25 cm², so that the separation functional layer faced upward, and a pressure of 1 MPa was applied thereto for 1 hour with a gas supplied from a nitrogen cylinder 30. Thereafter, the gas separation membrane was taken out of the cell 31 and subjected again to the determination of gas permeability under the conditions described above using the device shown in Fig. 2, and H₂/CO₂ selectivity was calculated. The results are shown in Table 1.

### (Production of Supporting Membrane)

DMF solution containing 16.0% by weight of a polysulfone (PSf) was cast on nonwoven polyester fabric (air permeability, 2.0 cc/cm2/sec) in a thickness of 200 µm under the conditions of 25°C. The coated fabric was immediately immersed in pure water and allowed to stand therein for 5 minutes, and a supporting membrane was thus produced.

### (Comparative Example 1)

In accordance with the method described in WO 2011/105278, the supporting membrane obtained by the technique described above was immersed for 2 minutes in an aqueous solution containing 6% by weight of m-phenylenediamine. Thereafter, the supporting membrane was slowly pulled up in the vertical direction, and nitrogen was blown thereagainst from an air nozzle to remove the excess aqueous solution from the surfaces of the supporting membrane. Furthermore, a 25°C undecane solution containing 0.16% by weight of trimesoyl chloride (TMC) was applied thereto so that the surface thereof was entirely wetted, and the coated supporting membrane was allowed to stand still for 1 minute and then held for 1 minute while keeping the surface of the supporting membrane vertical, and the excess solution was removed from the supporting membrane. This supporting membrane was allowed to stand still in a 25°C oven for 120 seconds, rinsed with 50°C warm water for 10 hours, and then dried in a 120°C oven for 30 minutes, and a gas separation membrane was thus obtained.

### (Comparative Example 2)

A gas separation membrane was obtained in the same manner as in Comparative Example 1, except that the solvent for TMC and the oven temperature among the conditions for the interfacial polymerization were changed to the conditions shown in Table 2.

### (Example 1)

In accordance with the method described in WO 2011/105278, the supporting membrane obtained by the technique described above was immersed for 2 minutes in an aqueous solution containing 6% by weight of m-phenylenediamine. Thereafter, the supporting membrane was slowly pulled up in the vertical direction, and nitrogen was blown thereagainst from an air nozzle to remove the excess aqueous solution from the surfaces of the supporting membrane. Furthermore, a 25°C undecane solution containing 0.16% by weight of trimesoyl chloride (TMC) was applied thereto so that the surface thereof was entirely wetted, and the coated supporting membrane was allowed to stand still for 1 minute and then held for 1 minute while keeping the surface of the supporting membrane vertical, and the excess solution was removed from the supporting membrane. This supporting membrane was allowed to stand still in a 25°C oven for 120 seconds, rinsed with 50°C warm water for 10 hours, and then immersed for 10 minutes in a 25°C aqueous solution containing 2 g/L Selectfluor (registered trademark) (Selectfluor contained 1-chloromethyl-4-fluoro-1,4-diazoniabicyclo [2.2.2] octane bis(tetrafluoroborate)). The supporting membrane was immersed in 25°C pure water for 10 minutes and then dried in a 60°C oven for 30 minutes, and a gas separation membrane was thus obtained.

### (Example 2)

A gas separation membrane was obtained under the same conditions as in Example 1, except that the 25°C aqueous solution containing 2 g/L Selectfluor (registered trademark) was replaced with a 60°C aqueous solution containing 4 g/L Selectfluor (registered trademark).

### (Example 3)

In accordance with the method described in WO 2011/105278, the supporting membrane obtained by the technique described above was immersed for 2 minutes in an aqueous solution containing 6% by weight of m-phenylenediamine. Thereafter, the supporting membrane was slowly pulled up in the vertical direction, and nitrogen was blown thereagainst from an air nozzle to remove the excess aqueous solution from the surfaces of the supporting membrane. Furthermore, a 25°C decane solution containing 0.16% by weight of trimesoyl chloride (TMC) was applied thereto so that the surface thereof was entirely wetted, and the coated supporting membrane was allowed to stand still for 1 minute and then held for 1 minute while keeping the surface of the supporting membrane vertical, and the excess solution was removed from the supporting membrane. This supporting membrane was allowed to stand still in a 100°C oven for 60 seconds, rinsed with 50°C warm water for 10 hours, and then immersed for 10 minutes in a 25°C aqueous solution containing 2 g/L Selectfluor (registered trademark). The supporting membrane was immersed in 25°C pure water for 10 minutes and then dried in a 120°C oven for 30 minutes, and a gas separation membrane was thus obtained.

### (Example 4)

A gas separation membrane was obtained under the same conditions as in Example 3, except that the temperature of the aqueous solution containing 2 g/L Selectfluor (registered trademark) was changed to 60°C.

### (Example 5)

A gas separation membrane was obtained in the same manner as in Comparative Example 1, except that the 25°C undecane solution containing 0.16% by weight of TMC was replaced with a 25°C undecane solution containing 0.16% by weight of TMC and 0.032% by weight pentafluorobenzoyl chloride.

### (Example 6)

A gas separation membrane was obtained in the same manner as in Comparative Example 1, except that the 25°C undecane solution containing 0.16% by weight of TMC was replaced with a 25°C undecane solution containing 0.16% by weight of TMC and 0.016% by weight of pentafluorobenzoyl chloride.

### (Example 7)

A gas separation membrane was obtained in the same manner as in Comparative Example 1, except that the 25°C undecane solution containing 0.16% by weight of TMC was replaced with a 25°C undecane solution containing 0.08% by weight of TMC and 0.08% by weight of tetrafluoroisophthaloyl chloride.

**Table 1**

| | H₂ permeability (nmol/m²/s/Pa) | H₂/CO₂ selectivity | H₂/N₂ selectivity | H₂/CO₂ selectivity after application of 1 MPa pressure | (Number of fluorine atoms) / (number of carbon atoms) |
|---|---|---|---|---|---|
| Comparative Example 1 | 60 | 6 | 10 | 6 | below detection limit |
| Comparative Example 2 | 52 | 9 | 16 | 9 | below detection limit |
| Example 1 | 71 | 14 | 31 | 14 | 0.002 |
| Example 2 | 80 | 23 | 77 | 23 | 0.018 |
| Example 3 | 68 | 13 | 24 | 13 | 0.001 |
| Example 4 | 77 | 21 | 60 | 21 | 0.007 |
| Example 5 | 79 | 19 | 35 | 19 | 0.08 |
| Example 6 | 73 | 21 | 42 | 21 | 0.047 |
| Example 7 | 90 | 15 | 21 | 13 | 0.12 |

**Table 2**

| | Interfacial polymerization conditions | | | Post-treatment conditions | |
|---|---|---|---|---|---|
| | Organic solvent | Acid chloride content (% byweight) | Oven temperature (°C) | Selectfluor (registered trademark) (g/L) | Temperature (°C) |
| Comparative Example 1 | undecane | TMC: 0.16 | 25 | - | - |
| Comparative Example 2 | decane | TMC: 0.16 | 100 | - | - |
| Example 1 | undecane | TMC: 0.16 | 25 | 2 | 25 |
| Example 2 | undecane | TMC: 0.16 | 25 | 4 | 60 |
| Example 3 | decane | TMC: 0.16 | 100 | 2 | 25 |
| Example 4 | decane | TMC: 0.16 | 100 | 2 | 60 |
| Example 5 | undecane | TMC: 0.16 | 25 | - | - |
| | | pentafluorobenzoyl chloride: 0.032 | | | |
| Example 6 | undecane | TMC: 0.16 | 25 | - | - |
| | | pentafluorobenzoyl chloride: 0.016 | | | |
| Example 7 | undecane | TMC: 0.08 | 25 | - | - |
| | | tetrafluoroisophthaloyl chloride: 0.08 | | | |

The results in Table 1 show that the gas separation membranes of Examples 1 to 4, in which fluorine atoms had been introduced onto aromatic rings after formation of a polyamide, and the gas separation membranes of Examples 5 to 7, in which an acid chloride having fluorine atoms introduced onto the aromatic ring had been added during the interfacial polymerization reaction, were high in H₂ permeability, H₂/CO₂ selectivity, and H₂/N₂ selectivity.

Furthermore, when examined for H₂/CO₂ selectivity after application of a pressure of 1 MPa, the gas separation membranes of Examples 1 to 6, in each of which the ratio of (number of fluorine atoms)/(number of carbon atoms) was 0.001-0.080, showed only a small change in performance due to the pressure application.

Gas separation membrane modules produced by employing the gas separation membranes shown in Examples 1 to 7enables to exhibit high H₂/CO₂ selectivity and H₂/N₂ selectivity.

While the invention has been described in detail and with reference to specific embodiments thereof, it will be apparent to one skilled in the art that various changes and modifications can be made therein without departing from the spirit and scope thereof. This application is based on a Japanese patent application filed on June 1, 2017 (Application No. 2017-108948), the contents thereof being incorporated herein by reference.

### INDUSTRIAL APPLICABILITY

The gas separation membrane, gas separation membrane element, gas separation device, and gas separation method of the present invention are suitable for use in purification by separating a specific gas from a mixed gas.

1: Gas separation membrane element
2: Gas-collecting pipe
3: Gas separation membrane
4: Feed-side channel member
5: Envelope membrane
6: Permeation-side channel member
7: Perforated end plate
8: Armoring material
9: Feed gas
10: concentrated gas
11: Permeate gas
20: Feed-gas cylinder
21: Sweep-gas cylinder
22: Mass-flow controller
23: Permeation cell
24: Valve
25: Gas chromatograph
26: Soap-film flow meter
30: Nitrogen cylinder
31: Cell

## Claims

1. A gas separation membrane comprising
a porous support layer and
a separation functional layer disposed on the porous support layer and comprising a crosslinked aromatic polyamide obtained by polycondensation of a polyfunctional aromatic amine with a polyfunctional aromatic acid halide,
the crosslinked aromatic polyamide containing aromatic-ring-bonded fluorine atoms and/or nitrogen-atom-bonded fluorine atoms.

2. The gas separation membrane according to claim 1, wherein the crosslinked aromatic polyamide, when analyzed by X-ray photoelectron spectroscopy (XPS), has a ratio of the number of fluorine atoms to the number of carbon atoms in the range of 0.001-0.12.

3. The gas separation membrane according to claim 1 or 2, wherein the crosslinked aromatic polyamide, when analyzed by X-ray photoelectron spectroscopy (XPS), has a ratio of the number of fluorine atoms to the number of carbon atoms in the range of 0.001-0.080.

4. A gas separation membrane element comprising
a gas-collecting pipe for collecting permeate gas,
a feed-side channel member,
a permeation-side channel member, and
the gas separation membrane according to any one of claims 1 to 3,
wherein the gas separation membrane has been disposed between the feed-side channel member and the permeation-side channel member so that the surface of the separation functional layer included in the gas separation membrane faces the permeation-side channel member, and
the gas separation membrane, the feed-side channel member, and the permeation-side channel member have been spirally wound around the gas-collecting pipe.

5. A gas separation device including the gas separation membrane according to any one of claims 1 to 3.

6. A gas separation method comprising
(1) a step in which a mixed gas containing carbon dioxide is fed to one surface of a gas separation membrane and
(2) a step in which a gas having a lower carbon dioxide concentration than the mixed gas is obtained through the other surface of the gas separation membrane,
wherein the gas separation membrane comprises
a porous support layer and
a separation functional layer disposed on the porous support layer and comprising a crosslinked aromatic polyamide obtained by polycondensation of a polyfunctional aromatic amine with a polyfunctional aromatic acid halide,
the crosslinked aromatic polyamide containing aromatic-ring-bonded fluorine atoms and/or nitrogen-atom-bonded fluorine atoms.

7. A gas separation method comprising
(1) a step in which a mixed gas containing nitrogen is fed to one surface of a gas separation membrane and
(2) a step in which a gas having a lower nitrogen concentration than the mixed gas is obtained through the other surface of the gas separation membrane,
wherein the gas separation membrane comprises
a porous support layer and
a separation functional layer disposed on the porous support layer and comprising a crosslinked aromatic polyamide obtained by polycondensation of a polyfunctional aromatic amine with a polyfunctional aromatic acid halide,
the crosslinked aromatic polyamide containing aromatic-ring-bonded fluorine atoms and/or nitrogen-atom-bonded fluorine atoms.

8. The gas separation method according to claim 6 or 7, wherein the mixed gas includes hydrogen and/or helium.
